# EUROPÄISCHE PATENTSCHRIFT

(11) **EP 1 803 851 B1**
(45) Veröffentlichungstag und Bekanntmachung des Hinweises auf die Patenterteilung: **19.07.2017**
(21) Anmeldenummer: 07000019.5
(22) Anmeldetag: 02.01.2007
(51) Int. Cl.: E01C 3/06, E01F 5/00

(54) **Wasserspeicher oder Versickerungssystem mit Reinigungssystem**
Water reservoir or infiltration ditch with purification system
Réservoir à eau ou rigole avec système de purification

(30) Priorität: 03.01.2006 DE 102006000800
(43) Veröffentlichungstag der Anmeldung: 04.07.2007
(73) Patentinhaber: Lingen, Elena, 47669 Wachtendonk (DE)
(72) Erfinder: Lingen, Elena, 47669 Wachtendonk (DE)
(74) Vertreter: Bungartz Christophersen Partnerschaft mbB Patentanwälte

(56) Entgegenhaltungen:
- WO-A-01/57317
- DE-U1- 20 000 015
- DE-U1- 29 807 653

## Beschreibung

Die Erfindung betrifft einen unterirdischen Wasserspeicher oder ein unterirdisches Versickerungssystem unterhalb von befestigten Verkehrsflächen, mit einem unterirdischen Reinigungssystem für Regenwasser.

Aus dem Stand der Technik sind aus den letzten Jahren diverse Möglichkeiten bekannt geworden das Regenwasser neben den üblichen Kanal- und Rigolensystemen auch auf andere Weise sinnvoll, insbesondere ökologischer zu entsorgen oder auch weiter zu nutzen.

So ist aus dem Europäischen Patent EP 0 938 615 eine mehrschichtige Bodenfläche für die Entsorgung von u. a. Regenwasser bekannt, wobei dem innerhalb einer Bodenabdichtungswanne eingebauten hochtragfähigen und porenreichen Schotter über mindestens ein auf der Abdichtung aufliegendes Dränagerohr Wasser zugeführt und wieder abgeleitet wird. Zur Reinigung sind Spülen und mikroorganische Prozesse vorgesehen.

Aus der WO 01/57 317 ist ein Versickerungssystem bekannt, das weitestgehend im Oberbau von Verkehrsflächen zu integrieren ist, wobei das über Dränagerohre eingeleitete Wasser insbesondere über die großflächige Sohle des Versickerungssystems in den dieses unterlagernden Boden versickert Die mit eingetragenen Sedimente sollen dabei weitestgehend beidseitig des auf der Sohle im tiefer liegenden Rohrgraben aufliegenden Dränagerohres verbleiben um von dort bei Bedarf ausgespült werden zu können.

U. a. von der Firma Fränkische Rohrwerke ist eine aus vielen Kunststoffgitterkästen zu formende Füllkörperrigole (Rigo-Fill) bekannt, in der das über Rohre eingeleitete Wasser eingestaut und ebenfalls insbesondere über die unterlagernden Bodenschichten versickert wird. Aufgrund der ebenen, aufgrund des Kunststoffgitters unzugänglichen und nur begrenzt spülbaren Rigolensohle werden zur präventiven Sedimentabwehr verschiedene Reinigungssysteme im Zufluss der Rigole angeboten. So wird zur Sedimentrückhaltung zusätzlich zu üblichen Grobschmutzfängem und anschließenden Filtersäcken von der Firma das System Sedi-Pipe verwendet, dem anschließend zur Unterstützung physikalisch-chemischer Reinigungsprozesse das System Sedi-Substrator nachgeschaltet werden kann. Eine weitere Rückhaltung der unerwünschten Einträge, insbesondere im System selbst, erfolgt nicht.

Von u. a. der Firma Eurofiltrator sind Halbschalen aus Kunststoff oder Ton zur mit Kiesüberschüttungen kombinierten Bildung von einstauvolumenerhöhten Rigolenkörpern bekannt. Auch dort ist ein präventiver Schutz des Systems gegen innere Kolmation nur im Zufluss vor dem eigentlichen Speicher selbst vorgesehen.

Von der Firma Mall-Beton sind aus Beton gebildete Zisternen mit einer als Versickerungssystem perforierten Betonwandung im Zisternenbereich oberhalb der Brauch- und/oder Löschwassernutzung bekannt, um Regenwasser durch Dauereinstau im unteren Bereich zu bevorraten und überschüssiges Wasser im oberen Bereich in den umgebenden Boden zu versickern. Auch bei diesen Systemen findet eine Reinigung nur vor dem Speicher, z. B. über Zentrifugalabscheider (Zyklone) statt.

Von mehreren anderen Herstellern (z. B. Funke Kunststoffe, Betonwerke B. Müller) sind Reinigungssysteme bekannt, die am Rand von Verkehrsflächen angeordnet sind, und die deren abfließendes Regenwasser über in der Versickerungsleistung optimierte künstliche Muldenersatzsysteme von Sedimente und Schadstoffen reinigen und anschließend versickern. Das Substrat ist nach einer Sediment- oder Schadstoffsättigung gegen neues Substrat auszutauschen.

Zudem gibt es noch eine Vielzahl anderer Hersteller vergleichbarer Wasserspeicher und/oder Versickerungssysteme, die alle das Ziel verfolgen nicht als Brauch- oder Löschwasser erforderliche Wassermengen in sauberem Zustand in den Systemen vorzuhalten und/oder über eine dauerhaft funktionsfähige Versickerungsfläche versickern zu können.

Diesem Wunsch nach einem ungeminderten Rückhaltevolumen und/oder dauerhaft funktionsfähigen Versickerung wirken die im Wasser mit eingetragenen Sedimente und Schadstoffe massiv entgegen, woraus die vorher beschriebenen Bemühungen resultieren, den Zufluss so weit wie möglich von diesen Stoffen zu befreien, die zwangsweise bei Versickerungssystemen früher oder später zu einer so genannten Selbstabdichtung der Versickerungsflächen (innere Kolmation) mit den eingetragenen Stoffen oder deren Umwandlungserzeugnisse führen.

Dies führt insbesondere bei den seit vielen Jahren bekannten herkömmlichen Rigolen aus zumeist Filterkies 8/16 oder 16/32 mm für die Versickerung von Regenwasser zu zunehmenden Funktionsbeeinträchtigungen im Verlauf der Nutzungszeit, da bei diesen Rigolen das Dränagerohr zumeist mittig in dem einem Rohrgraben ähnlichen Speicherkörper eingelegt ist, was dazu führt, dass die in den Speicherkörper eingebrachten Sedimente sich unter dem Dränagerohr beginnen abzusetzen, so die Rigolensohle zunehmend abdichten und mit weiterem Sedimenteintrag diese Abdichtung der Versickerungsflächen an den Rigolenseiten fortschreitet bis nach einigen Jahren die Rigole insgesamt abgedichtet und somit funktionsunfähig ist.

Die auf Rigolenhöhe bezogene mittige Lage des Dränagerohres verhindert zudem eine effektive Reinigung der Rigole, da alle unter dem Dränagerohr im Kies eingelagerten Sedimente nicht mehr ausspülbar sind.

Probleme dieser Art sind insbesondere auch von den Füllkörperrigolen aus Gitterkörben bekannt, die zumeist aus Kunststoffquadem bestehen. Da bei diesen Systemen eine Reinigung aufgrund des fehlenden Dränagerohres, was bei Kiesrigolen auch zur Spülung mit heran gezogen werden kann, nicht möglich ist und das Sediment sich auf einer entsprechend großen höhengleichen Sohlfläche zwischen den statisch erforderlichen Rippen und Streben der Kunstsoffquader mit dem einfließenden Wasser frei und für spätere Reinigungen unerreichbar verteilen kann, bieten hierfür die nachfolgend aufgezeigten erfindungsgemäßen Reinigungskomponenten erstmalig eine Reinigungsmöglichkeit an.

Um Sedimenteinträgen entgegen zu wirken sind inzwischen in die Speicherkörper aus Schüttgut neuester Entwicklung des GEO PROTECT-Systems integrierbare präventive Reinigungsmöglichkeiten eingearbeitet worden, die für eine teilweise Absetzung der eingetragenen Sedimente in der Nähe des zumeist als Dränagerohr ausgelegten Zuflussorgans in dessen Rohrgraben sorgen, wodurch ein nachfolgendes Ausspülen über die Dränagerohre ermöglicht wird, was ergänzend dadurch unterstützt wird, dass sich das Dränagerohr im Tiefpunkt des Systems befindet.

Ist ein Dränagerohr als Zuflussorgan vorhanden, verhindert üblicherweise bereits dessen wasserdurchlässige Schlitzung das Eindringen von Stoffen größer einem Durchmesser von maximal 2,5 mm.

Jedoch kann auch hier nicht der Eintrag von im Wasser gelösten Schadstoffen im Speicher verhindert werden, die aufgrund mikroorganischer Abbauprozesse im Speicherkörper selbst Umwandlungsrückstände, sogenannte Biomasse aus den Rückständen von Mikroorganismen bilden, die sich der Schwerkraft folgend auf der Speicher- bzw. Versickerungssohle zunehmend absetzen und über einen deutlich längeren Zeitraum wie bei bisherigen Rigolen üblich aber dennoch unvermeidlich zu einer Selbstabdichtung führen.

Die Menge der sich hier absetzenden Stoffe ist abhängig von der eingetragenen Schadstoffmenge sowie dem hydraulischen Verhalten des Speichers selbst, der bei z. B. schneller Befüllung und Ableitung den Mikroorganismen kaum Zeit zur Bildung von Biomasse lässt.

Die geringe Verweilzeit behindert demnach jedoch auch die Reinigung des Wassers, so dass dieses das System ggf. mit dem gleichen Verschmutzungsgrad verlässt wie es vorher eingestaut wurde, was insbesondere bei unmittelbar über die Rigolensohle versickernden Systemen das Grundwasser belastet.

Um eine weitest gehende Rückhaltung von negativen Einträgen ins Speicher- oder Versickerungssystem zu erzielen, sind leider Anlagen erforderlich, welche die Größe des Speicherkörpers und/oder der Versickerungseinrichtung in nichts nachstehen würden, was besonders beeindruckend an den großen Absetzbecken von Regenbehandlungsanlagen zu erkennen ist.

Um die daraus resultierenden Kosten nicht ausufern zu lassen sind dem entsprechend die bisherigen Systeme nur in der Lage aufgrund der begrenzten Rückhaltung von Sedimente in vorgeschalteten Schachtsystemen die Lebenszeit solcher Anlagen begrenzt zu verlängern.

Dem Eintrag von filterdurchgängigen Schwebstoffen und im Wasser gelösten Schadstoffen und Schwermetallionen wird über keines der aus dem Stand der Technik bekannten Systeme entgegen gewirkt.

Die DE 200 00 015 U1 betrifft eine Wasserleitung, insbesondere für Regenwasser, zur Aufnahme, Zwischenspeicherung und geminderten sowie zeitlich gestreckten Abgabe des in die Wasserleitung eingeleiteten Wassers, wobei die wasseraufnehmenden und -leitenden Bauteile der Wasserleitung aus mindestens einen Drainagerohr und einem aus tragfähigem, offenporigem, vorzugsweise möglichst hohlraumreichem Material gebildeten Speichermantel um das Drainagerohr herum bestehen. Das Drainagerohr und der Speichermantel bilden einen gemeinsamen Körper zur Aufnahme, Zwischenspeicherung und Leitung des Wassers sowie dessen Abgabe. Der Speichermantel kann aus Schotter gebildet werden, der in Abhängigkeit von der vorgegebenen Tragfähigkeit einen erhöhten oder den maximal möglichen Porenanteil aufweist. Der Schotter kann aufgrund des hohen Porenanteils einen aeroben Schadstoffabbau ermöglichen, wobei zur Optimierung des aeroben Schadstoffabbaus das natürliche Temperaturgefälle in der eingebauten Schottertragschicht in Form von Konvektionsströmen genutzt wird.

Die DE 298 07 653 U1 beschreibt untere Bodenfilter mit Untergrundversickerung bestehend aus einer kreisförmigen, runden, eckigen oder ähnlichen Grundrissform mit vertikaler Außenwand und Sohle aus dünnwandigem Material, die mit Erdstoff befüllt ist, so dass durch Zwischenwände ein vorgegebener Fließweg entsteht, wobei durch den Einbau vertikaler Dräns gleichzeitig das Wasserspeichervermögen erhöht werden soll und durch den mehrfachen Wechsel zwischen Dränungs- und Erdstoffbereich eine Wasserreinigung für Regenwasser oder eine weitergehende biologische Reinigung durch künstliche Belüftung für naturnah gereinigtes Abwasser erfolgt.

Der Erfindung liegt die Aufgabe zugrunde, das gattungsgemäß vorausgesetzte unterirdische Reinigungssystem des Wasserspeichers bzw. des Versickerungssystems so auszugestalten, dass eine teilweise bis weitestgehende Abscheidung, Filtrierung und/oder Umwandlung von Sedimenten, Schwebstoffen und/oder sonstigen Schadenstoffen aus dem zufließenden Wasser ermöglicht wird, bevor eine Funktionseinschränkung des Entwässerungssystems oder eine Umweltbelastung auftreten kann.

Die Aufgabe wird durch **Patentansprüch 1** und 2 gelöst.

Vorteilhafte Weiterbildungen und Ausgestaltungen sind in den **Patentansprüchen** 3 - 6 beschrieben.

Das erfindungsgemäße Reinigungssystem kann auf die zu erwartende Schmutzfracht ausgelegt werden.

Die einfachsten Reinigungsstufen für die Sedimentabscheidung sind aus Flächenfilter gebildet, die aus Filtervliese bestehen. Filterstabile Fliese für verschiedene Filterstufen sind bereits heute aus dem Rigolenbau oder vergleichbaren Anwendungen als Trenn- oder Rieselschutzvlies zwischen Rigole und angrenzenden Bodenschichten bekannt.

Die Rigolenseiten und/oder die Rigolenabdeckung können in einer abgedichteten Form ausgeführt werden um so jeglichen Fremdeintrag aus den umgebenden Bodenschichten zu verhindern.

Dies ist insbesondere dann von großer Bedeutung, wenn seitlich oder oberhalb der Rigole sehr feinkörniger bzw. bindiger oder schluffiger Boden ansteht und von dort durch die üblichen Rigolenvliese auf die versickerungswirksamen Flächen der Rigole gelangen kann, was diese nach und nach abdichten und damit funktionsunfähig machen würde.

Diese Umlagerung des die Rigole anschließend abdichtenden Bodens wird bisher noch massiv dadurch unterstützt, wenn z. B. aus dem umgebenden Boden Schichtenwasser einströmen kann. Auch dies verhindern an der Rigole seitlich anzubringende und/oder auf der Rigole aufliegende Dichtungen.

Ebenso ist auf diese einfache Bauweise, über eine seitliche und/oder oberhalb erfolgende Abdichtung einer Rigole, auch ein Schutz gegen Schadstoffeinträge aus dem umgebenden und ggf. belasteten Boden gegeben. Innerhalb belasteter Böden wird zudem erst auf diese einfache Weise eine Rigole umweltgerecht möglich. Ergänzende Gestaltungen dazu mit zusätzlichen Reinigungskomponenten folgen weiter unten.

In einer ersten Ausgestaltungsform der Erfindung ist der wasserspeicher bzw. das Versickerungssystem mit zumindest einem Filtervlies innerhalb des Speicherkörpers bzw. des Versickerungskörpers zu gestalten.

Das Filtervlies kann als Abdeckung des in der Rigole befindlichen Zuflussorgans bzw. Zuflussorgane vorzusehen, um dort ankommende Schadstoffe, wobei es sich bei Filtern insbesondere um Sedimente handeln sollte, zurück zu halten.

Wie sich bereits aus dem Stand der Technik ableiten lässt gibt es eine Vielzahl von Speicher- und Rigolenbauweisen und dem entsprechend auch viele Arten von Zuflussorgane, die mindestens eine linienförmige und/oder punktuelle Zuleitung des Wassers in den Speicher und/oder den Versickerungskörper ermöglichen. Diese können in der meist verbreiteten Form aus mindestens einem Dränagerohr als typische linienförmige Einleitung bestehen. Als punktuelle Einleitungen kommen z. B. gelochte Schachtringe oder einzelne bzw. zu Gruppen angeordnete offene oder mit Gitter oder Vlies abgedeckte Rohrenden aber auch Gitterkörbe oder Gitterkorbgruppen in Betracht.

Die flächigen Filtervliese sollten dementsprechend bei sehr nahem Einbau am Zuflussorgan an dieses entsprechend angepasst werden.

Dieser sehr nahe Einbau am Zuflussorgan stellt zudem sicher, dass die Sedimente zum größten Teil im Zuflussorgan verbleiben und somit einfach, jedoch auch entsprechend oft auszuspülen sind, sofern sie nicht bei Speichersystemen direkt mit dem abfließenden Wasser mit hinausgespült werden.

Je weiter das Filtervlies vom Zuflussorgan entfernt im Speicher und/oder Versickerungssystem selbst angeordnet wird, umso größer wird die Filterfläche und damit die hydraulische Durchströmungsfähigkeit sowie der Rückhalteraum für Sedimente zwischen Zuflussorgan und Filtervlies, was Reinigungsintervalle verlängern hilft.

Die hydraulische Wirksamkeit kann auch noch dadurch vergrößert werden, dass das Filtervlies zur Flächenvergrößerung in hin- und hergehendem Zickzack-Muster in das Entwässerungssystem eingebaut wird, wie es z. B. von Luftfiltern im Automobil bekannt ist.

Um eine möglichst umfassende Abfiltrierung nicht nur der Sedimente, sondern auch der Schwebstoffe aus dem Wasser zu erzielen kann es durchaus sinnvoll sein nicht nur ein Filtervlies, sondern mit gewissem Abstand mehrere Filtervliese unterschiedlicher Filterstufen nacheinander innerhalb der Rigole anzuordnen, wobei die Stufen in Einströmrichtung zunehmend feinere Sedimente bis hin zur Schwebstofffiltrierung ausführen können.

Dieses mehrstufige Filterverfahren kann in einer anderen Ausgestaltungsform auch in nur ein, dabei jedoch dementsprechend dickes bzw. mehrlagiges Filtervlies ohne Zwischenabstand integriert werden.

Die Filterfläche bzw. der Sedimentationsraum größere Speicher- oder Rigolenbereiche kann bis hin zum fast vollständigen Speicher- oder Rigolenkörper umfassen.

Dazu kann z. B. auf dem Speicher- oder Rigolenplanum und den dazu gehörenden Böschungen eine dünne Schicht Granulat, z. B. aus Sand, Kies, Splitt, Schotter, Lava, oder vergleichbarem aufgebracht sein, auf dem anschließend ein Filtervlies aufgelegt bzw. an den Böschungen hochgeführt wird. Auf das Filtervlies wird das Zuflussorgan bzw. die Zuflussorgane und der restliche Rigolenkörper aufgebaut.

Auf die Granulatschicht kann dann verzichtet werden, wenn das Filtervlies selbst, z. B. als Dränagematte, deren Aufgabe mit erfüllen kann.

Dies hat bei Rigolen zur Folge, dass in die Rigole mit dem Wasser eingetragene Sedimente sich vor Erreichen und Abdichten des Rigolenplanums auf dem Filtervlies absetzen und das Wasser das sensible Rigolenplanum so von Sedimenten befreit erreicht.

Diese Bauweise hat den Vorteil, dass große hydraulische Leitfähigkeit mit großem Sedimentationsraum verbunden werden kann.

Nachteilig ist dabei ggf. die damit einhergehende Retentionsraumreduzierung durch die starken Sedimenteinträge, was jedoch mit den heutigen Systemen ohne die spätere in der Beschreibung folgende neuen Möglichkeiten der Reinigung vergleichbar ist.

Dazu kommt noch der erhöhte Aufwand beim Ausspülen der eingetragenen Sedimente, wozu vorzugsweise noch weitere erfindungsgemäße bauliche Ergänzungen zu empfehlen sind, die weiter unten folgen.

Um auch nach Jahren des Sedimenteintrags und damit ggf. einhergehender Selbstabdichtung des Filtervlieses nach wie vor eine Versickerung über das von Sedimenten unbelastete Rigolenplanum zu ermöglichen, kann das Filtervlies an den Rigolenböschungen bzw. Rigolenseitenwänden nicht bis zum Rigolenscheitel hoch geführt werden, um so dem Wasser auch bei weitestgehender Abdichtung des Filtervlieses einen Überstau über die Filtervliesoberkante in den durch das Filtervlies geschützten Versickerungsbereich zu ermöglichen.

Bei Speichersystemen ist eine so großflächige Filterauslegung nicht erforderlich, da es hier nur um den Schutz des Rückhalteraums und nicht um den Schutz von oft sehr sensibel reagierenden Versickerungsflächen auf dem gewachsenen oder entsprechend konditionierten Boden geht.

In einer zweiten Ausgestaltungsform der Erfindung kann anstatt des Filtervlieses zur alternativen Absetzung von Sedimente auch direkt eine dichte, nicht filternd wirkende Zwischenschicht, z. B. aus Folie, Bentonitbahn, Dichtvlies, Blech, Beton, Bitumen oder sonst wie als erfindungsgemäße Absetzeinrichtung vorgesehen sein.

Absetzeinrichtungen verfolgen zumeist das Ziel die Strömungsgeschwindigkeit zu reduzieren um dadurch über einen vorzugsweise noch zusätzlich verlängerten Fliesweg ein Absetzen der im Wasser noch mitschwimmenden Sedimente und/oder Schwebstoffe gezielt auf der überströmten Absetzfläche zu erwirken. Vergleichbar arbeiten z. B. Absetzbecken von Regenkläranlagen.

Auch bei den Absetzeinrichtungen macht es Sinn die Absetzschicht nicht nur horizontal bis leicht geneigt, sondern am Ende hoch zu führen, um wie bei den vorher beschriebenen Filtern beschriebene, entsprechend große Sedimentationsräume und/oder die Möglichkeit des Überstaus über die Oberkante der Absetzeinrichtung zu erhalten.

Es sind auch durchaus Kombinationen von Filter- und Absetzvorrichtungen sinnvoll und daher auch möglich.

So kann es z. B. vorkommen, dass auf Altlasten aufgebrachte Speichersysteme, die eine Versickerung aufgrund der Abdichtungswanne in belastete unterlagernde Bodenschichten verhindern partiell oberhalb unbelasteter unterlagernder Bodenbereiche versickerungsfähig ausgebildet sind, um so aus dem vorher ggf. komplett, bzw. weitest gehend abgedichteten System ein so weit mögliches Versickerungssystem zu schaffen.

Egal wie das Reinigungssystem als Filter- und/oder Absetzeinrichtung arbeitet; es verbleiben in zunehmendem Umfang Sedimente im Speicherraum und reduzieren diesen dem entsprechend.

Es ist daher für eine dauerhafte Funktionsfähigkeit unerlässlich die Sedimente von Zeit zu Zeit aus dem System hinaus zu spülen und/oder zu blasen.

Um diesen Reinigungsvorgang effizient zu gestalten sind die Rigolen bei entsprechender Größe mit den heute zur Verfügung stehenden Verfahren nicht in ihren kompletten Abmessungen in einem Arbeitsgang zu reinigen, da das über die Spülfahrzeuge in die zumeist großen Rückhalteräume einbringbare Spülwasser wohl weniger Spüleffekt erzielt als ein kleiner zufließender Regenschauer.

Um diesem Nachteil entgegenzuwirken ist es unerlässlich die zu reinigenden Bereiche aufzusplitten, um diese dann voneinander getrennt ausspülen und/oder ausblasen zu können.

Diese Aufteilung kann, muss aber nicht, bei Filter- und/oder Absetzreinigungssystemen auf den Bereich der Zuflussorgane bis zum Filtervlies oder der Absetzschicht begrenzt werden, da darüber hinaus keine nennenswerten Sedimenteinträge mehr zu erwarten sind.

Eine solche Aufteilung eines Speichers oder einer Rigole kann vorzugsweise durch Schotte erfolgen, welche die einzelnen Speicher- oder Rigolenbereiche gegeneinander abschotten. Die Schotte können dazu aus beliebigen Materialien gebildet werden, die auch auf den z. B. Reinigungsquerschnitt vorkonfektioniert herzustellen sein können. Vorzugsweise werden wohl Platten, Folien, Fliese, Bleche oder sonst welche flächigen Bauteile aus Beton, Kunststoff, Metall, Geotextil, Bitumen, usw. in dichter bis weitestgehend dichter Ausführung Verwendung finden. Es wäre jedoch auch möglich die Rigole selbst zu stückeln um so reinigungsfähige Einheiten zu erzielen.

Damit die Spülenergie auf den einzelnen Bereich konzentriert werden kann und nicht verpufft ist bei linienförmigen Zu- bzw. Abflussorganen aus der zur Spülleitung entgegengesetzten Richtung vorzugsweise eine Abdichtungsblase im Bereich des Schottes zu setzen. So kann mit konzentrierten Druck-Saugvorgängen ein für diese Reinigungsvariante im abgeschotteten Bereich maximaler Reinigungseffekt erzielt werden.

Dasselbe gilt für eine Reinigung über Blas-Saugvorgänge.

Nachteilig bei diesen Reinigungslösungen ist, dass die Sedimente insbesondere durch einen, trotz Schotte, zumeist immer noch relativ schwachen Saugvorgang aus dem Absetz- oder Filterbereich zu lösen sind.

Die Reinigungsfähigkeit des Erfindungsgegenstandes kann demnach dadurch noch weiter erhöht werden, wenn das System mit weiteren erfindungsgemäßen Ausgestaltungen unter Druck rückspülbar zu gestalten ist.

Um diese maximale Reinigungsfähigkeit der erfindungsgemäßen Reinigungssysteme zu erzielen, wird vorzugsweise in die Abflussorgane Spülwasser oder Spülluft eingebracht und am Zuflussorgan abgesogen.

Der Reinigungseffekt ist in einer weiteren Ausgestaltungsform dadurch zu erhöhen, dass z. B. in den durch Filtervlies oder Absetzschicht geschützten Rigolenbereich eine zusätliche Zuflussmöglichkeit für Spülwasser oder -luft verlegt ist, die auch mit entsprechend hohem Druck beaufschlagt werden kann. Über dieses Spülorgan kann Spülwasser oder Spülluft mit hohem Druck eingebracht werden, dass nun entgegen der sonst üblichen Fliesrichtung von der entgegengesetzten Seite gegen die auf dem Filtervlies abgelagerten Sedimente drückt und diese so vom Filtervlies löst und anschließend über das Zu- oder Abflussorgan ausspült, bzw. abgesogen werden kann.

Die bisherigen aufgezeigten erfindungsgemäßen Reinigungssysteme beschränkten sich ausschließlich auf die Rückhaltung von Sedimente bis hin zu Schwebstoffe.

Diese stellen jedoch nur einen Teil der möglichen Schadstoffe dar. Aus Umweltgesichtspunkten kritischer sind jedoch die im Wasser gelösten oder am Sediment anhaftenden Schadstoffe von z. B. Kohlenwasserstoffe bis hin zu Schwermetalle zu bewerten, die bisher bei Rigolen nicht zurückgehalten werden konnten.

Dem entsprechend wurden Rigolen für diese Schadstoffrückhaltung bisher zumeist Versickerungsmulden vorgeschaltet, die aus mikroorganisch belebten Bodenschichten, zumeist Mutterboden, gebildet werden, in denen die Schadstoffe über Mikroorganismen und andere Wechselwirkungen des Bodens weitestgehend abgebaut oder gebunden werden.

Der Vorteil dieser Versickerungsmulden ist die sehr naturnahe Funktionsweise, die zugleich eine umfassende Reinigung sicher stellt, wie sie über menschgemachte Systeme nur bedingt oder verbunden mit großem Aufwand nachzuvollziehen ist.

Diese natürliche Funktionsweise soll so weit wie möglich, bzw. erforderlich nachempfunden werden.

So sind neben den bereits angesprochen in die Speicher- und/oder Rigolenkörper integrierten physikalischen Verfahren zur Absetzung und/oder Filtration, nunmehr auch zusätzlich, Adsorption und/oder Fällung, Ionenaustausch und/oder biologischer Abbau, usw. von Schadstoffe erwünscht und mit dem Erfindungsgegenstand erstmals auch möglich.

Dieses ggf. breite Reinigungsspektrum ist vorzugsweise über ein zusätzlich in die Rigolen einbringbares und/oder unterlagerndes Granulat mit großer Oberfläche (z. B. Lava, Bims, Aktivkohle, Fasern, Splitt, Sand, etc.) zu realisieren, welches als Träger für natürliche Reinigungsmedien und/oder als Besiedungsraum für Mikroorganismen für die gewünschten Reinigungsstufen dienen soll.

Alternativ kann auch das den Speicher oder die Rigole bildende Granulat direkt mit einem für diese Aufgabe geeigneten Material gemischt werden, was insbesondere deswegen sinnvoll sein kann, da gebrochenes Granulat aus natürlichem Gestein für Mikroorganismen gut besiedungsfähige bzw. eine gut haftende Oberfläche für eine entsprechende Nähr- oder Reinigungslösung bietet.

Die Reinigungskomponenten können jedoch auch über z. B. in das Speichermineral des Speichers oder der Rigole eingemischte Fasern oder Mikroröhrchen in den Speicher oder die Rigole eingebracht werden.

Bei Rigolen kann unterlagemdes Granulat auch direkt aus einem für Versickerungsmulden geeigneten Mutterboden gebildet sein. Dabei kann es zusätzlich erforderlich werden die Belüftung der Granulatschicht durch z. B. wurzelähnliche Fasern oder Mikroröhrchen zu verbessern.

Um diesen, insbesondere alle natürlichen Reinigungsprozesse umfassenden erfindungsgemäßen Reinigungssystem, eine gute Reinigungsleistung zu ermöglichen, ist zudem eine gute Luftversorgung angeraten, da bei zu geringem oder keinem Luftaustausch die aktiveren aeroben mikroorganischen Abbauprozesse in anaerobe Prozesse umkippen können, die nicht nur weniger effektiv sondern auch mit unangenehmen Faulgerüchen einhergehen können.

Sofern der Porenraum in den Speichern und Rigolen nicht schon aus sich heraus einen ausreichenden Luftvorrat für aerobe Prozesse liefert, kann ein Luftaustausch auch über zusätzliche Belüftungseinrichtungen sicher gestellt werden, welche in doppelter Funktion auch zugleich als die weiter oben beschriebenen Spüleinrichtungen mit verwendet werden können.

Diese können von der Rigolensohle bis an die Oberfläche oder in die Schächte hinein geführt werden und dort aufgrund ihrer konstruktiven Gestaltung auf die darüberstreichende Luft so reagieren, dass so ein permanenter Luftaustausch, wenn möglich bis in die ganze Rigole, ermöglicht wird.

In der Regel wird jedoch der Luftaustausch aufgrund der Pumpwirkung aus Wassereinstau (verbrauchte Luft wird aus dem System hinaus gedrückt) und Abfluss (frische Umgebungsluft wird eingesogen) ausreichend sein.

Die direkte Verbindung von Speicher und/oder Rigole mit dem erfindungsgemäßen Reinigungssystemen, erlaubt demnach nicht nur einen Verzicht auf die bekannten vorgeschalteten Absetz-, und/oder Filterbaugruppen und/oder Muldenversickerungen, sondern erlaubt aufgrund der zumeist großen Speicher und Rigolenkörper eine Optimierung des Reinigungsprozesses mit geringeren Mitteln.

Dies ist insbesondere darin begründet, dass mit der integrierten Reinigung z. B. in einer Rigole eine erheblich größere Versickerungsfläche muldenäquivalent zur Verfügung gestellt werden kann, was nicht nur die sonst erforderlichen Muldenflächen an der Oberfläche einspart, sondern auch aufgrund der größeren Fläche zu einer geringeren Belastung des mit der Versickerung belasteten Bodens führt. Die so erzielte geringere Versickerungsleistung je Quadratmeter in der Rigole erlaubt zudem eine reduzierte Reinigungsschichtdicke wie sie ansonsten für eine oberflächige Versickerungsmulde erforderlich gewesen wäre.

Um einer einseitigen Betrachtungsweise der folgend beschriebenen Ausführungsbeispiele in Bezug auf die dort nur aus Speichermineral dargestellten Wasserspeicher- und Versickerungssysteme entgegen zu wirken, sei hier vorsorglich und ergänzend zum vorstehenden Text darauf hingewiesen, dass es sich bei den Speicherkörpem ebenso um Füllkörperrigolen aus Kunststoffquadem oder allen sonstigen Speicherbildnem oder einer Kombination der unterschiedlichsten Speicherbildner handeln kann.

Das vorab beschriebene erfindungsgemäße Reinigungssystem ist bei allen Wasserspeicher- und/oder Versickerungssystemen anwendbar.

In den Zeichnungen sind mehrere Ausführungsbeispiele der Erfindung dargestellt. Sie zeigen:
- Fig. 1: zeigt einen Wasserspeicher im Querschnitt
- Fig. 2: zeigt einen weiteren Wasserspeicher im Querschnitt
- Fig. 3: zeigt den Wasserspeicher aus Figur 1 im Längsschnitt
- Fig. 4: zeigt ein Versickerungssystem im Längsschnitt
- Fig. 5: zeigt das Versickerungssystem aus Figur 4 im Querschnitt A-B
- Fig. 6: zeigt das Versickerungssystem aus Figur 4 im Querschnitt C-D

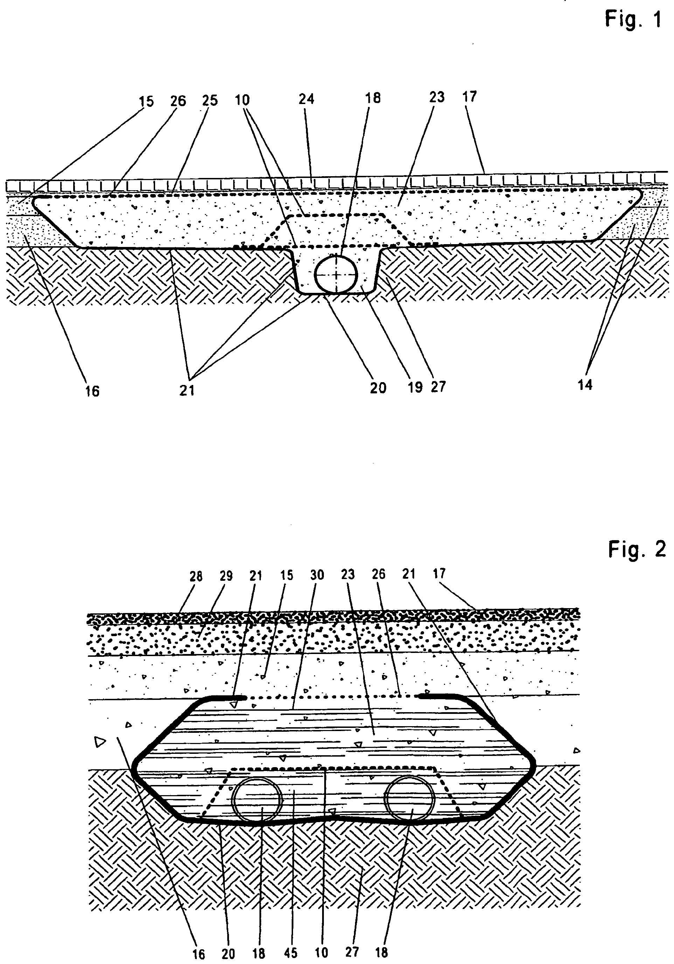

In Figur 1 ist ein Wasserspeicher 23 dargestellt, der zum größten Teil innerhalb der Schottertrag- 15 und Frostschutzschicht 16 des Oberbaus 14 einer Verkehrsfläche 17 und nur zu einem geringen Teil in den gewachsenen Boden 27 eingebaut ist, in dessen aus Schotter gebildetem Speichermaterial ein mehrstufiges erfindungsgemäßes Reinigungssystem 18, 19, 10 angeordnet ist. Dazu ist zusätzlich zu einem in einem Rohrgraben 19 liegenden grobfiltrierenden Dränagerohr 18 ein erstes Filtervlies 10 oberhalb des Dränagerohres 18 auf dem Planum unmittelbar am oberen Rand des Rohrgrabens 19 in den Speicher eingelassen. Ebenfalls innerhalb des Wasserspeichers 23 befindet sich in zeltförmiger Ausführung ein zweites Filtervlies 10.

Das einströmende Wasser wird in diesem Ausführungsbeispiel in fünf Stufen gereinigt. Die erste Stufe ist die schmale Schlitzung der Dränagerohre 18, die bei einer Breite von nur 1-2 mm nur noch kleine Sedimente und Schwebstoffe, sowie im Wasser gelöste Schadstoffe in den Wasserspeicher 23 gelangen lassen. Alle größeren mit eingetragenen Sedimente und Gegenstände verbleiben im Dränagerohr 18 und werden mit dem nachströmenden Wasser weitergetragen bis sie den Wasserspeicher 23 verlassen.

Sedimente, welche die Dränagerohrschlitzung passieren konnten, jedoch aufgrund ihres Eigengewichtes nicht mit der Zuflussströmung im Rohrgraben 19 aufsteigen können, lagern sich auf der Rohrgrabensohle 20 ab. Es kommt zu einer ersten Absetzreinigung.

Ein Teil der leichteren Sedimente kommt zwar in einen begrenzten Schwebezustand, verbleiben jedoch aufgrund ihres Gewichtes innerhalb des Rohrgrabens 19 und setzen sich in diesem auf dem Schotter des Wasserspeichers 23 und auf der Rohrgrabensohle 20 ab. Dies fällt in den Bereich einer zweiten Absetzungsreinigung.

Nur die Schwebstoffe erreichen das erste Filtervlies 10 und werden von diesem bis zu einer vorbestimmten Größe, die über die Maschenweite des Filtervlieses 10 festgelegt ist, abgefiltert und bilden mit der Zeit einen zunehmenden Filterkuchen auf der Unterseite des ersten Filtervlieses 10. Die meisten kleineren Schwebstoffe passieren diese erste Filterstufe 10.

Das darüber angeordnete zweite Filtervlies 10 hält nun die noch verbliebenen noch kleineren Schwebstoffe bis zu einer über die Maschenweite des Filtervlieses 10 vorbestimmten Größe zurück.

Nach dieser zweiten Filterstufe erreichen nur noch sehr geringe Schwebstoffanteile den Grossteil des Wasserspeichers 23.

Dient wie in diesem Ausführungsbeispiel dargestellt das Dränagerohr 18 nicht nur der Wassereinleitung, sondern auch dessen Ausleitung bringt dies den Vorteil mit sich, dass sich das Wasser bei der Ausleitung entgegen der vorherigen Strömungsrichtung bewegt und so einen Grossteil der vorher eingetragenen Schwebstoffe und Sedimente wieder bis ins Dränagerohr 18 abführt, um von dort den Wasserspeicher 23 zu verlassen. Unterstützt wird dieser Effekt insbesondere bei den Filterstufen 10 dadurch, dass diese bei der Wasserableitung die Filtervliese 10 in primär vertikaler Richtung von oben nach unten durchströmen und so den Mitnahmeeffekt nochmals deutlich erhöhen, was die Reinigungsintervalle des Wasserspeichers 23 erheblich verlängern hilft.

In derselben Weise würde bei diesem Reinigungssystem auch die Spülung erfolgen, indem Spülwasser erst in den Wasserspeicher 23 eingebracht wird, um es danach mit möglicht hoher Saugleistung abzusaugen, um so einen möglichst starken Abbau des an den beiden Filtervliesen 10 anhaftenden Filterkuchens und der im Rohrgraben eingelagerten Sedimente zu erwirken.

In Figur 2 ist ein in der Funktionsweise zu Fig. 1 vergleichbarer Wasserspeicher 23 dargestellt, der ebenfalls unterhalb einer hier jedoch als bituminösem Belag 28, 29 gebildeten Verkehrsfläche 17 eingebaut ist.

Der Zu- und Abfluss erfolgt hier aufgrund der großen Wassermengen über zwei in Längsrichtung parallel verlaufende Dränageleitungen 18.

Der große Zufluss in Bezug auf den ansonsten klein dimensionierten Wasserspeicher 23 begrenzt die Reinigungsleistung auf nur sehr geringe Absetzprozesse und nur eine Filtervliesstufe 10.

Mehr ist hier auch nicht erforderlich, da aufgrund der hohen hydraulischen Belastung die durch die Filterstufe 10 gelangenden Schwebstoffe im Schwebezustand verbleiben und sich somit nur zu einem sehr geringen Anteil im Wasserspeicher 23 absetzen können.

Dieser Schwebezustand wird noch dadurch unterstützt, dass das Wasser an dem gebrochenen Schottermaterial des Wasserspeichers 23 vorbeistreicht und dabei stark verwirbelt.

Um so mehr Sedimente und Schwebstoffe setzen sich in den durch das Filtervlies begrenzten Wasserspeicherbereich 45 ab.

Dieser ist über die beiden parallel angeordneten Dränagerohre 18 jedoch hervorragend durch Querspülung zu reinigen, indem in eines der Dränagerohre 18 Spülwasser eingepumpt und aus dem anderen Dränagerohr 18 das Spülwasser abgesogen wird. Dieser Spülvorgang kann noch durch mehrmaliges Wechseln der Dränagerohrnutzung von Zufluss- zu Absaugleitung und zurück sowie dem nur abschnittsweisen Spülen durch das abschnittweise setzen von Abdichtblasen in den Dränagerohren unterstützt werden.

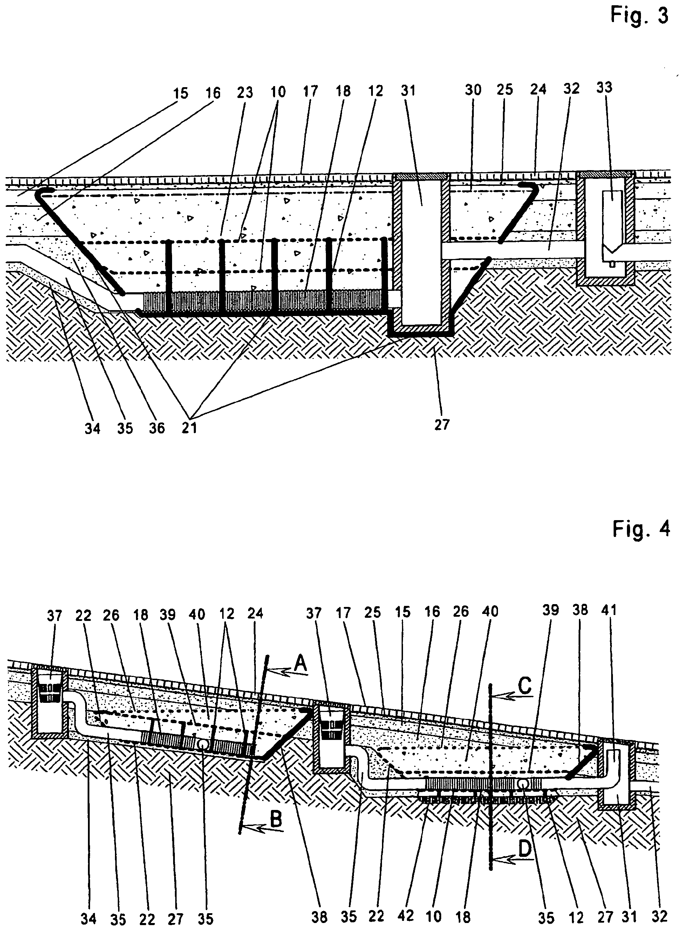

Figur 3 zeigt den Wasserspeicher 23 aus Fig. 1 im Längsschnitt. Es ist zu erkennen, dass die Zuleitung 35 in den Wasserspeicher 23 über ein Kanalrohr erfolgt, dass erst im Wasserspeicher 23 nach Passieren der Abdichtungswanne 21 in das Dränagerohr 18 übergeht.

Das Dränagerohr 18 durchdringt eine Vielzahl von Schotte 12 die aus PE-HD-Platten gebildet sind und den mittels Spülen erreichbaren Bereich des Wasserspeichers in einzelne Spülbereiche unterteilt, um so die Spülleistung voll ausnutzen zu können und nicht wie in einem nicht unterteilten Reinigungssystem zu erwarten, aufgrund des nicht unterteilten Wasserspeichers 23 verpuffen zu lassen.

Zwischen den Schotten 12 befindet sich die erste, sprich untere Filtervliesstufe 10. Darüber ist auf der Oberkante der Schotte 12 aufliegend das zweite, sprich obere Filtervlies 10 zu erkennen.

Soll der Wasserspeicher 23 gespült werden, wird entweder von einem nicht dargestellten Schacht auf der Zuflussseite außerhalb des Wasserspeichers 23 oder über den dargestellten Schacht 31 im Bereich des ersten Schotts 12 in Zuflussrichtung, eine Abdichtungsblase ins Dränagerohr 18 gesetzt. Nach Setzen der Abdichtungsblase wird über den Schacht 31 die eigentliche Spülleitung eingebracht, die sich vorzugsweise ebenfalls über einen um den Spülschlauch liegenden Blasenring an dem zweiten Schott in Zuflussrichtung anpresst. Wird nun Spülwasser in diesen mittels zwei Schotte 12 und die beiden Abdichtungsorgane abgetrennten Bereich mit hohem Druck eingebracht, bzw. abgesogen, entsteht ein kräftiger Spüleffekt, der ohne die Schotte 12 nicht zu erzielen wäre.

Um diesen Effekt zu erzielen ist es zwar vorteilhaft, wenn die Schotte wasserdicht ausgeführt sind, dies ist jedoch nicht zwingend erforderlich. Auch ein wasserdurchlässiges Vlies kann aufgrund seiner durchflussbegrenzenden Eigenschaft als Schott 12 durchaus geeignet sein.

Der Abfluss aus dem Wasserspeicher 23 erfolgt von Schacht 31 über eine als Kanal ausgelegte Abflussleitung 32 zu einem Schacht mit Drossel-Überstauorgan 33, über welches das Wasser gedrosselt bzw. bei Erreichen des maximalen Einstauniveaus 30 ungedrosselt abgeleitet wird.

Da ein Teil des Wasserspeichers tiefer liegt als die Abflussleitung 32 verbleibt ein Teil des zugeflossenen Wassers im Wasserspeicher 23, das als Brauch- und/oder Löschwasser aus Schacht 31 mit einer nicht dargestellten Saugleitung entnommen werden kann.

In Figur 4 ist ein Versickerungssystem 40 dargestellt, dass aus mehreren Rigolen eine mehrstufige Entwässerungskaskade zur Versickerung von Regenwasser bildet.

Die Bau und Funktionsweise ist mit der von Wasserspeichern weitestgehend identisch, wobei der hauptsächliche Unterschied darin besteht, dass das zugeflossene Wasser in der Regel nicht mehr aus dem System über Leitungen abgeleitet, sondern soweit möglich über die Rigolensohlen des Versickerungssystems 40 versickert wird. Einzig eine Überstauentlastung 41 in der tiefsten Rigole für nicht mehr speicherfähige Wassermengen ist vorgesehen.

Typisch für solche Systeme ist, dass nicht nur Zuflüsse über Gullys 37 sondern auch Zuflüsse 35 von der Seite, von anderen Gullys oder Hausanschlüssen in das Versickerungssystem 40 erfolgen.

Um sowohl einen Austritt des gespeicherten Wassers aus den Versickerungssystemen 40 in den aus Schottertragschicht 15 und Frostschutzschicht 16 gebildeten Oberbau der Verkehrsfläche 17 zu verhindern als auch einen Schichtwasserzutritt aus den hier angrenzenden schluffigen Bodenschichten 27 in die Rigole zu unterbinden, sind die Versickerungssysteme 40 soweit erforderlich im Randbereich mit einer Randabdichtung 38 aus Bentonitbahnen versehen.

Wie in Fig. 1 und 3 bereits dargestellt sind auch bei dem hier dargestellten Versickerungssystem 40 Filtervliese 10 oberhalb des Rohrgrabens 19 und der Schotte 12 eine große Hilfe bei der Reinhaltung des Versickerungssystems 40.

Es ist hier jedoch in beiden Kaskadenstufen nur ein Filtervlies 10 vorgesehen, da eine weitere Reinigung insbesondere der im Wasser gelösten Schadstoffe bzw. nicht weiter absetz- oder filterbaren Wasserinhaltsstoffe nachfolgend vorgesehen ist.

Diese weitergehende Reinigung erfolgt bei den dargestellten Kaskaden erst auf der Rigolensohle über einen künstlich geschaffenen belebten Bodenfilter 42, welcher die Reinigungswirkung einer an der Oberfläche angeordneten natürlichen Versickerungsmulde zur Neutralisierung von im Wasser gelöster Schadstoffe nachempfindet.

Um den Bodenfilter 42 aerob zu halten ist dieser in diesem Ausführungsbeispiel aus hochporenreicher Lava, gemischt mit Edelsplitt aus Hartgestein zur Tragfähigkeitserhöhung und einem luftgängigen Fasermaterialgemisch und Humusstoffen hergestellt, um sowohl eine Schwermetallbindung als auch einen Abbau von Kohlenwasserstoffen über Mikroorganismen zu ermöglichen.

Um den belebten Bodenfilter 42 vor Sediment oder Schwebstoffeinträge zu schützen und das Versickerungssystem 40 ohne Austrag von Bodenfiltermaterial 42 spülen zu können, ist dieser mit einem Filtervlies 10 überdeckt.

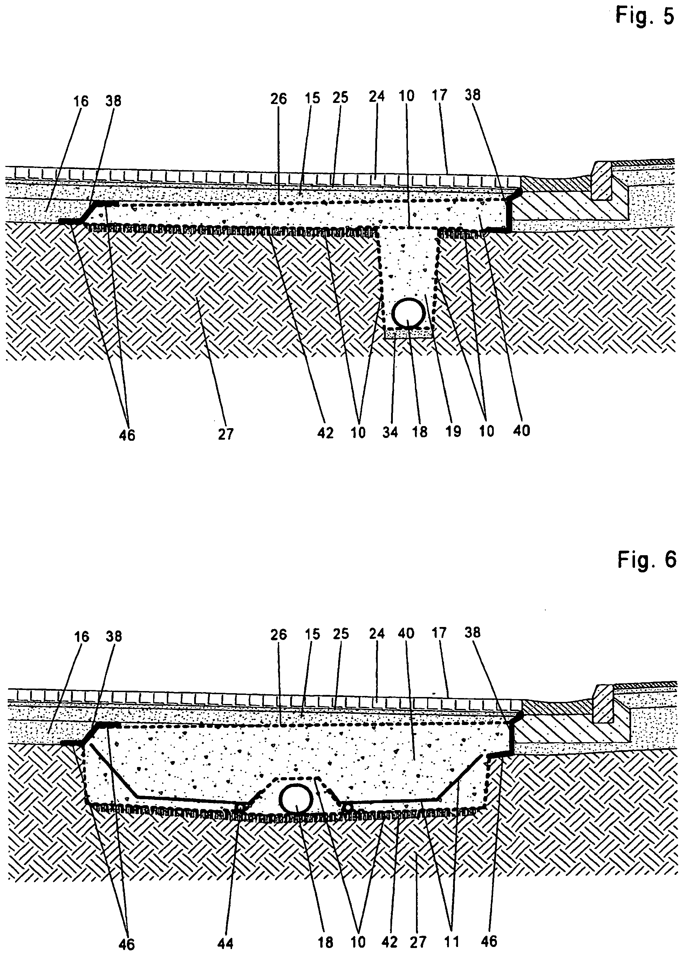

Figur 5 zeigt die in Fig. 4 dargestellte obere Kaskadenstufe im Querschnitt in Pfeilrichtung des Schnittes A-B. Um in den aus Schotterschicht 15 und Frostschutzschicht 16 bestehenden Oberbau der Verkehrsfläche 17 nicht in unzulässiger Weise Wasser aus dem Versickerungssystem 40 einströmen zu lassen, ist dieser Bereich mit Randabdichtungen 38 aus wasserdichten Bentonitbahnen ausgestattet, die über Überlappungen 46 auf dem Planum und am Scheitel auch diese Übergangsbereiche ausreichend abdichten.

Auch an den beiden Seiten des Rohrgrabens 19 und der Rohrgrabensohle sind zum Schutz vor Ausspülungen Filtervliese 10 angebracht.

Figur 6 zeigt die in Fig. 4 dargestellte untere Kaskadenstufe im Querschnitt in Pfeilrichtung des Schnittes C-D. Bei dieser Ausführungsform wird das mit dem Wasser zugeleitete Sediment und die Schwebstoffe über eine beidseitig des Dränagerohres 18 langgestreckte Absetzfolie 11 aus PE-HD-Schaum vorgenommen, welche zu den Seitenrändern des Versickerungssystems 40 hin hochgezogen wird, um so einen möglichst großen Absetzeffekt und Sedimentationsraum zu erhalten.

Erst wenn das ggf. über Stunden bereits zufließende Regenwasser den Scheitel der Absetzfolie erreicht, wird dieser überströmt und das bis dahin weitestgehend von Sedimente und Schwebstoffe gereinigte Wasser an den empfindlichen Bodenfilter 42 zur weiteren Reinigung mit anschließender Versickerung abgeleitet.

Um eine gute Belüftung des Bodenfilters 42 sicherzustellen und diesen zusätzlich entgegen der üblichen Fliesrichtung rückspülen zu können, sind für diese Zwecke beidseitig des Dränagerohres 18 je ein Spül- und Belüftungsrohr 44 vorgesehen.

## Patentansprüche

1. Unterirdischer Wasserspeicher mit einem Reinigungssystem für Regenwasser, das in den Wasserspeicher (23) eingeleitet wird, wobei der Wässerspeicher (23) ein Zuflussorgan (18) und einen Speicherkörper aufweist, wobei der Speicherkörper aus Speichermineral, Kunststoffquadern oder Kombinationen daraus gebildet ist,
**dadurch gekennzeichnet, dass** das Reinigungssystem mindestens einen Flächenfilter (10), bestehend aus einem Filtervlies zum Filtern von Sedimenten, und/oder mindestens eine Absetzschicht (11) aufweist, die innerhalb des Speicherkörpers integriert sind bzw. ist.

2. Unterirdisches Versickerungssystem mit einem Reinigungssystem für Regenwasser, das in den Versickerungssystem (40) eingeleitet wird, wobei das Versickerungssystem (40) ein Zuflussorgan (18) und einen Versickerungskörper aufweist, wobei im Übergangsbereich zwischen dem Versickerungskörper und den angrenzenden Bodenschichten Filtervliese (22, 26) angeordnet sind, **dadurch gekennzeichnet, dass** das Reinigungssystem mindestens einen Flächenfilter (10), bestehend aus einem Filtervlies zum Filtern von Sedimenten, und/oder mindestens eine Absetzschicht (11) aufweist, die innerhalb des Versickerungskörpers integriert sind bzw. ist.

3. Wasserspeicher oder Versickerungssystem gemäß einem der Ansprüche 1 oder 2, **dadurch gekennzeichnet**, das das den Speicherkörper oder den Versickerungskörper bildende Speichermaterial ein für einen natürlichen Reinigungsprozess konditioniertes Granulat, konditionierte Fasern und/oder ₑᵢₙₑ fließfähige, bzw. flüssige Lösung enthält.

4. Wasserspeicher oder Versickerungssystem nach Anspruch 3, **dadurch gekennzeichnet, dass** das Reinigungssystem belüftungsfördernde Materialien im Schadstoffabbau enthält.

5. Wasserspeicher oder Versickerungssystem gemäß einem der vorhergehenden Ansprüche **dadurch gekennzeichnet, dass** das Reinigungsystem durch mindestens ein Schott (12) unterteilt ist.

6. Wasserspeicher oder Versickerungssystem gemäß einem der vorhergehenden Ansprüche, **dadurch gekennzeichnet, dass** das Reinigungssystem mit zusätzlichen Spül- und/oder Belüftungsvorrichtungen (44) ausgestattet ist.

## Claims

1. Underground water reservoir having a purification system for rainwater which is introduced into the water reservoir (23), wherein the water reservoir (23) has an inflow member (18) and a reservoir body, wherein the reservoir body is formed from reservoir mineral, plastic cuboidal blocks or combinations thereof **characterized in that** the purification system has at least one flat filter (10), consisting of a filter web for filtering sediments, and/or at least one settling layer (11), which are or is integrated within the reservoir body.

2. Underground infiltration system having a purification system for rainwater which is introduced into the infiltration system (40), wherein the infiltration system (40) has an inflow member (18) and an infiltration body, wherein filter webs (22, 26) are arranged in the transition region between the infiltration body and the adjoining soil layers, **characterized in that** the purification system has at least one flat filter (10), consisting of a filter web for filtering sediments, and/or at least one settling layer (11), which are or is integrated within the infiltration body.

3. Water reservoir or infiltration system according to either of Claims 1 and 2, **characterized in that** the reservoir material forming the reservoir body or the infiltration body contains granules conditioned for a natural purification process, conditioned fibres and/or free-flowing or liquid solution.

4. Water reservoir or infiltration system according to Claim 3, **characterized in that** the purification system contains materials which promote aeration in the breakdown of pollutants.

5. Water reservoir or infiltration system according to one of the preceding claims, **characterized in that** the purification system is subdivided by at least one bulkhead (12).

6. Water reservoir or infiltration system according to one of the preceding claims, **characterized in that** the purification system is equipped with additional flushing and/or aeration devices (44).

## Revendications

1. Réservoir d'eau souterrain doté d'un système de nettoyage pour l'eau de pluie introduite dans le réservoir (23) d'eau,
le réservoir (23) d'eau présentant un organe d'amenée (18) et un corps d'accumulation,
le corps d'accumulation étant formé d'un minéral d'accumulation, de parallélépipèdes en matière synthétique ou de leurs combinaisons,
**caractérisé en ce que**
le système de nettoyage présente au moins un filtre de surface (10) constitué d'un feutre de filtration qui filtre les sédiments et/ou d'au moins une couche de dépôt (11), qui sont intégré dans le corps d'accumulation.

2. Système d'infiltration souterrain doté d'un système de nettoyage de l'eau de pluie introduite dans le système d'infiltration (40),
le système d'infiltration (40) présentant un organe d'amenée (18) et un corps d'infiltration,
des feutres de filtration (22, 26) étant disposés dans la partie de transition entre le corps d'infiltration et les couches de sol adjacentes,
**caractérisé en ce que**
le système de nettoyage présente au moins un filtre de surface (10) constitué d'un feutre de filtration qui filtre les sédiments et/ou d'au moins une couche de dépôt (11), qui sont intégrés à l'intérieur du corps d'infiltration.

3. Réserve d'eau ou système d'infiltration selon l'une des revendications 1 ou 2, **caractérisés en ce que** le matériau d'accumulation qui forme le corps d'accumulation ou le corps d'infiltration contient un granulé conditionné pour un processus de nettoyage naturel, des fibres conditionnées et/ou une solution fluide ou liquide.

4. Réserve d'eau ou système d'infiltration selon la revendication 3, **caractérisés en ce que** le système de nettoyage contient des matériaux de démolition qui favorisent la ventilation.

5. Réserve d'eau ou système d'infiltration selon l'une des revendications précédentes, **caractérisés en ce que** le système de nettoyage est divisé par au moins une paroi (12).

6. Réserve d'eau ou système d'infiltration selon l'une des revendications précédentes, **caractérisés en ce que** le système de nettoyage est équipé de dispositifs supplémentaires de lavage et/ou de ventilation (44).
